# EUROPEAN PATENT APPLICATION

(11) **EP 2 397 033 A1**
(43) Date of publication of application: **21.12.2011**
(21) Application number: 11380051.0
(22) Date of filing: 10.06.2011
(51) Int. Cl.: A01K 27/00

(54) **Leash for pets**

(30) Priority: 18.06.2010 ES 201030640 U
(71) Applicant: San Sebastian Mendizabal, Andoni, 48620 Plentzia Vizcaya (ES)
(72) Inventor: San Sebastian Mendizabal, Andoni, 48620 Plentzia Vizcaya (ES)
(74) Representative: De Pablos Riba, Julio

(57) **Abstract**

The invention has been designed to get a leash that is remained permanently linked to the pet collar, thereby preventing that the owner or keeper of the pet has to carry with him/her the leash when the animal is released to run or play in places or areas designated for that effect. For that purpose, it is constituted from a handle (1) provided with fixing means (2) to be attached on the lateral surface of the collar (3), with detachable character in relation to this, with the peculiarity that said handle (1) is extended by one of its ends on a cord or cable (7) that is inserted into the collar (3) itself and is linked to an automatic winding device (9). This device may be materialized in a drum supported by a spring or coil spring, as part of the collar itself.

## Description

### OBJETCT OF THE INVENTION

The present invention relates to a leash for pets, whose obvious aim is to constitute a coupling means to the corresponding collar provided in the neck of the pet, in order to hold the pet during the typical walks on public thoroughfare.

The object of the invention is to get a leash that is remained permanently linked to the pet collar, thereby preventing the owner or keeper of the pet has to carry with him/her the leash when the animal is released to run or play in places or areas designated for the effect.

### BACKGROUND OF THE INVENTION

As is known, there are rules in which pets, especially certain types of dogs, when they go to the public thoroughfare should be hold with a leash and even wear a muzzle to prevent that animal bites to citizens.

Well, pets, regardless of whether the most of the time, the current rules are not met, go to certain areas and are released from the leash with which the owner or keeper hold them, for which this leash links to a ring provided in a collar that has the animal in its neck so that when the leash is released from the pet collar, the animal is released and can "run around" and carry out the relevant exercises, including the physiological actions.

However, when the owner or keeper of the pet releases the leash from the collar, he/she should hold the leash, which involves make use of one of his/her hands, and the nuisance of having to take the leash until the hooking again to the pet to hold it at certain times or when returns to home.

### DESCRIPTION OF THE INVENTION

The leash that is proposed is designed to solve the aforementioned problems, so that this remains linked to the collar permanently, so when the pet is released, the leash can be kept as part of the collar and thus enabling to the owner or keeper to have both hands free.

More specifically, the leash of the invention is constituted from a handle that has linking means to the lateral surface of the collar, that is, to a section of it, and whose fixing means may be pins, magnets, type Velcro® adhesive strips, etc., so that in any case the handle is extended by one of its ends on a cable or cord of sufficient strength, that goes into part of the collar where there is an element of automatic winding, such as a drum supported by a spring, so that this drum is hidden and housed in a section of the collar and reasonably corresponding with the linking area of the handle to the collar.

As a result of the handle can be released from the collar by virtue of that is linked thereto with the fixing means already discussed, such as magnets, Velcro® type strips, fastening elements like pressure clips, etc.., when the owner or keeper has held the pet, said animal can move on an area around the keeper or owner, according to the total length of cable or cord constituent of the leash, being extended by pull of the animal when it moves.

In such circumstances, when the owner or keeper of the pet wants to release the pet, approximating the handle to the collar of the animal it is enough, so the cable or cord is collected automatically and fully, handle being fixed to the collar as described above, so the pet can be released completely and the owner also released of the leash, since this is linked to the collar.

Therefore, the advantage of the leash of the invention compared to conventional leashes, is to prevent that the owner or keeper of the pet has to take the leash when releases the pet at the place where he/she has gone to train the animal, with also the additional advantage that the leash never can be forgotten at home, as often happens, since said leash is permanently linked to the collar itself, and this logically arranged on the animal's neck.

Finally say that the cable or cord which constitutes the leash itself, will be of an appropriate length to carry the pet not very far, because if the cord or cable was too long, its winding would occupy a lot of space on the collar and would be uncomfortable for the animal.

### DESCRIPTION OF THE DRAWINGS

To complement the description that will be done immediately after and in order to help a better understand of the features of the invention, according to a preferred embodiment thereof, it is attached as an integral part of this description, a set of drawings wherein, with illustrative and non-limitative character, the following has been represented:

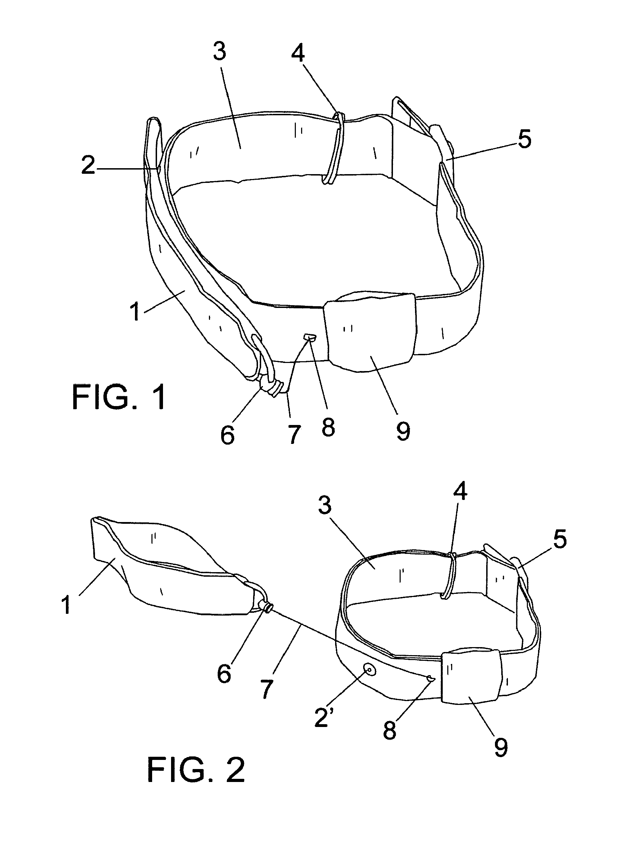

Figure 1.- Shows a representation according to an overview of a pet collar in which the corresponding leash is arranged hidden inside the collar and linked to the handle attached, with detachable character, relative to collar.
Figure 2.- Also shows a perspective view of the collar represented in the figure above, wherein the leash can be seen spread out and emerging from that collar, and the handle in which the leash is concluded.

### PREFERRED EMBODIMENT OF THE INVENTION

As it can see from the referred figures, the leash of the invention is constituted from a handle (1) which has fixing means (2) on other complementary (2') established for that purpose on a collar (3) that is conventional and is located on the animal's neck, collar (3) of which has conventional clasp of closure means (5), and even with a ring (4) for the attachment of a conventional leash.

From the handle (1), the novelty of the invention consist in that this, and with the interposition of a core (6), extends into a cable or cord (7) that is introduced through a hole (8) in the collar (3), to link the free end of that cord or cable (7) in an automatic winding drum supported by a spring that forms a winding device (9) that it is held and hidden in the own body of the collar (3), as can be seen in figures.

Thus when the handle (1) is attached to the collar (3) by the media (2) already referred to, that may be materialized in magnets, pressure clips, Velcro® type adhesive tape, or any other conventional system, the cord or cable (7) that also has been said it is high strength, passing through the hole (8) of the collar (3) is completely wound in the automatic winding device (9), that is, in the drum supported by a spring that is hidden in the assembly which constitutes such a device (9), so the pet can walk freely with the collar and leash included.

Now, when it is wanted to hold the pet with the leash, that is, through the cord or cable (7), it is enough with detach the anchorage of the handle (1) with respect to the collar (3), and by the traction effect of the animal in its movements, the cable or cord (7) constituent of the leash will be unwound of the automatic winding device (9), to the length established for that, allowing to carry out the hold of the animal without any problems, so for the release of the animal will be enough with the approximation to the collar (3) thereof, setting the handle (1) so that automatically cord or cable (7) is wound around the device (9), thus leaving the whole of the leash fixed to the collar, which allows to the owner or keeper of the pet to keep free his/her two hands, avoiding on the other hand that the leash can be forgotten when he/she leaves the house with the pet so that the pet does exercises or the corresponding physiological actions.

## Claims

1. Leash for pets that being created to be linked to the collar arranged in the neck of a pet and allow to hold the animal during strolls or walking on public thoroughfare, is **characterized in that** it is constituted from a handle provided with fixing means on the lateral surface of the collar, with independable character with respect to this, with the peculiarity that the handle is extended by one of its ends on a cord or cable that is inserted into the collar itself and is linked to an automatic winding device consisting of a drum preferably supported by a spring, being a part of the collar itself.
